# EUROPÄISCHE PATENTSCHRIFT

(11) **EP 2 520 402 B1**
(45) Veröffentlichungstag und Bekanntmachung des Hinweises auf die Patenterteilung: **25.03.2015**
(21) Anmeldenummer: 12177175.2
(22) Anmeldetag: 12.11.2007
(51) Int. Cl.: B29B 9/06, B29C 47/12

(54) **Stranggranulationsverfahren**
Strand granulating method
Procédé de granulation en tête

(30) Priorität: 27.11.2006 DE 102006055914; 15.06.2007 DE 102007027543
(43) Veröffentlichungstag der Anmeldung: 07.11.2012
(62) Teilanmeldung aus: 07819757.1
(73) Patentinhaber: Bühler Thermal Processes AG, 9245 Oberbüren (CH)
(72) Erfinder: Boczon, Jaroslaw, 63762 Grossostheim (DE); Doll, Andreas, Aschaffenburg Aschaffenburg (DE); Fenchel, Sven, 64287 Darmstadt (DE); Culbert, Brent Allan, 9500 Wil (CH); Eusebio, Fernando, 8592 Uttwil (CH); Morganti, Franziska, 8057 Zürich (CH)
(74) Vertreter: Hepp Wenger Ryffel AG

(56) Entgegenhaltungen:
- DE-A1- 19 739 747
- DE-C1- 4 314 162

## Beschreibung

Die Erfindung bezieht sich auf ein Verfahren zur Herstellung von Granulatkörnem von Polymeren von thermoplastischen Polyestern oder Copolyestern aus einer Polyesterschmelze mit einem Stranggranulator, bei dem die Polyesterschmelze Düsen und danach als Stränge über eine Abzugsstrecke der Granulationsvorrichtung mit Einzugswalzen zugeführt wird, wobei z.B. über die Einzugswalzen eine Strangabzugsgeschwindigkeit v_{ab} der Stränge eingestellt wird.

Entsprechende Stranggranulatoren sind beispielsweise von der Anmelderin selbst bekannt, welche solche Stranggranulatoren beispielsweise unter der Produktbezeichnung Rieter USG 600 herstellt und vertreibt.

Generell stellt die Herstellung von Granulatkörnern von Polymeren von thermoplastischen Polyestern oder Copolyestern aus einer Polyesterschmelze die Fachleute vor gewisse Schwierigkeiten, welche sich insbesondere aus den spezifischen Materialeigenschaften dieser Polymere von thermoplastischen Polyestern oder Copolyestern ergeben. So neigen daraus hergestellte Granulatkörner besonders dazu, bei Erwärmung über die Glasübergangstemperatur des Materials an ihren Oberflächen miteinander zu verkleben, was eine Weiterverarbeitung beinahe unmöglich macht. Um dieses Verkleben zu vermeiden, werden z.B. zusätzliche aufwendige Wärmebehandlungsschritte durchgeführt, um eine Kristallisation der erzeugten Granulatkörner zu bewirken, wobei diese Wärmebehandlungen teilweise auch Verfahrensschritte beinhalten, bei welchen die Eigenwärme, welche in den Granulatkörnern noch vorhanden ist, benützt wird. Alle diese Verfahren sind jedoch sehr aufwendig und insbesondere aufgrund der hinsichtlich der Temperatureinstellungen sehr sensiblen Verfahrensabläufe auch nur unter großem Regelungs- und Steuerungsaufwand der Temperatursteuerung durchführbar.

Auch spezielle Verfahren zur Herstellung von Granulatkörnern von Polymeren von thermoplastischen Polyester, welche Materialien mit spezifischen Materialeigenschaften, wie etwa Polyester mit geringen Viskositäten, verwenden, sind sehr aufwendig und hinsichtlich ihrer Beherrschbarkeit, insbesondere z.B. hinsichtlich der Beherrschbarkeit der Materialeigenschaften, fehleranfällig. Ein entsprechendes Verfahren ist beispielsweise aus dem europäischen Patent EP 1 551 609 B1 bekannt. Dort wird ein Verfahren zur Herstellung von Polyesterharzen mit sehr niedriger intrinsischer Viskosität beschrieben, wobei ein im Wesentlichen herkömmliches Stranggranulationsverfahren unter Verwendung eines handelsüblichen Stranggranulators zur Anwendung kommt. Es werden Stränge mit tiefer Viskosität und dementsprechend tiefer Schmelzefestigkeit beschrieben. Ein geringer Abstand zwischen Düsenaustritt und Eintritt in ein Kühlmedium dient der Gewährleistung einer Stabilisierung der Stränge. Ein Veränderung der Oberflächenstruktur, sowie ein Einfrieren von Oberflächeneffekten, die durch eine starke mechanische Belastung der Stränge beim Düsenaustritt entstehen, wird nicht beschrieben.

Aus der deutschen Offenlegungsschrift DE 28 14 113 ist eine Vorrichtung zum Granulieren von Kunststoffsträngen bekannt, bei welcher eine Unterwassergranulationsvorrichtung gezeigt ist, die hinsichtlich der Kühlmittelführung im Bereich ihrer Schneid- und Düsenplatte optimiert ist, um die oben angesprochene kritische Einstellung der erforderlichen Temperaturbereiche dort zu gewährleisten.

Aus der Patentanmeldung WO 03/031133 ist es bekannt, auf Granulatkörnern eine Oberflächenschicht mit erhöhter Nukleierungsdichte zu erzeugen, wodurch sich verbesserte Verarbeitungsbedingungen in nachfolgenden thermischen Prozessen ergeben. Dazu muss jedoch zunächst ein definiertes Feuchteprofil eingestellt werden. Anschließend wirkt Wasser bei der Kristallisation als Nukleierungsmittel, wodurch ein insgesamt teilkristallines Granulat mit erhöhter Nukleierungsdichte an der Oberfläche entsteht. Ein ähnliches Erzeugen einer teilkristallinen Oberflächenstruktur durch die Einwirkung von Wasser beschreibt die deutsche Patentanmeldung DE 19933476, wobei auch hier die Oberflächenkristallinität im Verlauf der Kristallisation der gesamten Stränge und somit den daraus resultierenden Granulatkörnern erfolgt. In beiden Fällen wird ein Einfrieren von Oberflächeneffekten oder ein Erzeugen von amorphen Granulaten mit modifizierter Oberflächenstruktur, nicht beschrieben.

In der DE-43 141 62 C1 ist ein Verfahren zur Direktkristallisation von PET in einem Stranggranulationsverfahren beschrieben. Eine mechanische Belastung der aus der Düse austretenden Polymerstränge ist ebenso wenig beschrieben wie ein Einfrieren etwaig gebildeter Produkteigenschaften.

Die DE-197 39 747 A1 offenbart ein Verfahren gemäss den Oberbegriffen der Ansprüche 1 und 4.

Insgesamt besteht somit zurzeit kein zufriedenstellendes Verfahren (und auch keine entsprechende Vorrichtung), welche(s) die Herstellung von zuverlässig weiterverarbeitbaren Granulatkörnern von Polymeren von thermoplastischen Polyestern oder Copolyestern aus einer Polyesterschmelze mit einem Stranggranulator auf möglichst einfache und kostengünstige Weise ermöglicht. Dies gilt insbesondere hinsichtlich möglichst hoher angestrebter Massedurchsätze, da dann die Einstellung thermischer Gegebenheiten umso schwieriger wird und auch z.B. die häufig geringe Viskosität des Polyesters zu Problemen führt, wie beispielsweise zu Strangabriss, Verkleben der Stränge und/oder der Granulatkörner oder ähnliches.

Es ist daher die Aufgabe der vorliegenden Erfindung, ein Verfahren und eine Vorrichtung zur Herstellung von Granulatkörnern von Polymeren von thermoplastischen Polyester oder Copolyestern aus einer Polymerschmelze mit einem Stranggranulator vorzusehen, welche(s) die Nachteile des Standes der Technik überwindet und eine kostengünstige und vereinfachte Herstellung von entsprechenden Granulatkörnern vorsieht, welche einfach und zuverlässig weiterverarbeitbar sind.

Die Aufgabe der vorliegenden Erfindung wird erfindungsgemäß gelöst mit einem Verfahren mit den Merkmalen gemäß Anspruch 1 oder 4. Bevorzugte Ausführungsformen sind in den jeweiligen Unteransprüchen definiert.

Bei den erfindungsgemäßen Verfahren ist es möglich, z.B. kristallisierbare oder zumindest teilweise kristallisierbare Polymere von thermoplastischen Polyester oder Copolyestern aus einer Polyesterschmelze zu extrudieren, zu granulieren und zu kühlen, wobei die Granulatkörner auch bei weiterer Verwendung nicht einfach verkleben.

Typische Beispiele der Polyester sind Polyethylenterephthalat (PET), Polybutylenterephthalat (PBT) und Polyethylennaphthalat (PEN) die entweder als Homopolymer oder als Copolymere zum Einsatz kommen.

Dem Polymeren können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Werden Treibmittel eingesetzt, so ist darauf zu achten, dass diese nicht zu einer wesentlichen Schaumbildung und somit Expansion der extrudierten Stränge und somit der resultierenden Granulate rühren. Es soll auf jeden Fall eine Expansion unter 10%, bevorzugt unter 5% eingehalten werden.

Handelt es sich bei dem thermoplastischen Polyester um ein Polyethylenterephthalat oder eines seiner Copolymere, so weist dieses bevorzugterweise eine intrinsische Viskosität von 0.3 bis 1 dl/g auf, gemessen in einer Mischung aus Phenol:Dichlorbenzol (1:1). Besonders bevorzugt sind Polyethylenterephthalate mit einer intrinsischen Viskosität größer als 0.4 dl/g und noch bevorzugter größer als 0.48 dl/g.

Im Gegensatz zum oben beschriebenen Stand der Technik, bei welchem eine ausgeklügelte Temperaturführung der dort verwendeten Prozesse und/oder die gezielte Einstellung eines Feuchteprofils in Strängen/Granulatkörnern in den dort verwendeten Apparaturen absolut essentiell ist, wobei bei Erzeugung der Stränge aus der entsprechenden Polyesterschmelze eine mechanische Beanspruchung der Stränge möglichst minimiert wird, um die geschilderten Effekte, wie Strangabriss oder negative Einflüsse durch die Viskosität des extrudierten Materials zu vermeiden, z.B. durch Minimierung der Aufweitung des Stranges und Vermeidung der Scherungseffekte an der Oberfläche des Stranges, werden bei den im Folgenden beschriebenen erfindungsgemäßen Verfahren gerade durch Erhöhung der mechanischen Belastung, z.B. durch Strangaufweitung und/oder Erzeugung von Scherungsprofilen, gewünschte Materialeigenschaften und/oder Oberflächeneigenschaften des extrudierten Stranges und der daraus granulierten Granulatkörner erzeugt und durch entsprechende Abkühlung "eingefroren", so dass diese gemäß der Erfindung erzeugten bzw. erzeugbaren Eigenschaften auch bei Prozessen, welche mit hohen Massedurchsätzen gefahren werden, ein Verkleben der daraus erzeugten Granulatkörner wirksam und zuverlässig auf einfache Art und Weise verhindern. Die entsprechend erfindungsgemäß erzeugbaren Materialeigenschaften können in weiteren Verarbeitungsschritten als effektive Nukleierungskeime für eine Kristallisation der so erzeugten Granulatkörner wirken, wobei die Kristallisation nicht über komplizierte Einstellung von Materialeigenschaften, z.B. der Viskosität, erfolgen muss oder durch komplizierte Verfahrensabläufe, welche eine aufwendige Temperatureinstellung und Temperaturführung erfordern, wie dies die Prozesse des Standes der Technik benötigen.

Die gemäß den erfindungsgemäßen Verfahren hergestellten amorphe Granulatkörner weisen eine Randschicht mit stark nukleierter Struktur auf, wodurch sie eine verminderte Klebeneigung in nachfolgenden Kristallisationsverfahren aufweisen. Die erfindungsgemäß erzeugten Materialeigenschaften können auch bereits zu einer teilweise kristallinen Struktur an und unter der Oberfläche des Stranges und den daraus hergestellten Granulaten führen. Auch in diesem Fall lässt sich eine anschließende Kristallisation auf einfacherem Weg als im Stand der Technik üblich erreichen.

Bei einem erfindungsgemäßen Verfahren zur Herstellung von Granulatkörner von Polymeren von thermoplastischen Polyester oder Copolyestern aus einer Polyesterschmelze mit einem Stranggranulator, bei dem die Polyesterschmelze den Düsen des Stranggranulators und danach als Stränge über eine Abzugsstrecke des Stranggranulators der eigentlichen Granulationsvorrichtung mit Einzugswalzen zugeführt wird, wobei über die Einzugswalzen des Stranggranulators eine Strangabzugsgeschwindigkeit v_{ab} der Stränge eingestellt werden kann, erfolgt beispielsweise der Austritt der Stränge aus den Düsen mit einer Austrittsgeschwindigkeit vₐᵤₛ von mindestens 110 m/min, was etwa drei bis zehn Mal so schnell ist, wie die Austrittsgeschwindigkeit, welche gemäß dem Stand der Technik bekannt ist. Ferner kann bei dem erfindungsgemäßen Verfahren ein Verhältnis von Austrittsgeschwindigkeit vₐᵤₛ geteilt durch die Fläche f der Düsenöffnung einer jeweiligen Düse vₐᵤₛ/f so eingestellt werden, dass dieses erfindungsgemäße Verhältnis die Bedingung vₐᵤₛ/f ≥ 30 m/(min x mm²) erfüllt. Bei dem erfindungsgemäßen Verfahren werden (dann) die so aus den jeweiligen Düsen austretenden Stränge in einen Kühlfluidkontakt gebracht.

Das bei dem erfindungsgemäßen Verfahren verwendbare Verhältnis der Austrittsgeschwindigkeit vₐᵤₛ geteilt durch die Fläche f der Düsenöffnung einer jeweiligen Düse vₐᵤₛ/f, welches beispielsweise so eingestellt werden kann, dass es die Bedingung vₐᵤₛ/f ≥ 30 m/(min x mm²) erfüllt, ist ein Ausdruck, welcher entgegen dem Stand der Technik, eine relativ hohe Austrittsgeschwindigkeit vₐᵤₛ der Polyesterschmelze in Relation zu einer relativ kleinen Fläche f der Düsenöffnung einer jeweiligen Düse setzt, was eine bestimmte mechanische Beanspruchung der extrudierten Polyesterschmelze bedeutet.

Durch die erfindungsgemäßen Verfahren wird bewusst eine mechanische Beanspruchung des extrudierten Materials bei der Formung der Stränge erzeugt, wobei diese mechanische Beanspruchung gewisse Spannungen im Strangmaterial bzw. in den aus diesem Strangmaterial erzeugten Granulatkörner erfindungsgemäß nach sich zieht, wobei dies durch den möglichst frühzeitigen Kühlfluidkontakt "eingefroren" wird.

Durch das Einfrieren der Spannungen an und unter der Oberfläche des Stranges bzw. der Granulatkörner entsteht eine Schicht mit hoher Nukleierungsdichte, also eine Schicht hoher Zahl an Kristallkeimen. Beispielsweise weist diese Schicht eine Dicke von zumindest 5 µm, insbesondere zumindest 10 µm auf. Üblicherweise ist die Randschicht auf maximal 10% des Granulatradius oder ungefähr 100 µm begrenzt.

Die Nukleierungsdichte lässt sich durch anschließendes Abschrecken und darauf folgendes thermisches Kristallisieren in einem heißen Gasstrom mittels Dünnschnittmikroskopie sichtbar machen. Dabei soll eine zumindest 10 Mal höhere Nukleierungsdichte in der Randschicht als im spannungsfreieren Materialbereich erzeugt werden. Die Nukleierungsdichte wird dabei gemäß 6/PI/dc³ berechnet, wobei dc dem mittleren Kristalldurchmesser entspricht.

Gleichzeitig können die so erzeugten Spannungen zu einer örtlichen Verstreckung und somit zu einer spontanen Kristallisation führen. Da die Spannungen vor Allem im Bereich eines maximalen Scherfeldes auftreten, das bei der Strangformung in der Düse an der Strangoberfläche gebildet wird, ist die kristalline Schicht auf die Außenschicht des Stranges und somit auf die Mantelschicht der Granulate begrenzt. Gemäß einer bevorzugten Ausführung der vorliegenden Erfindung weist diese Schicht eine Dicke von zumindest 5 µm, insbesondere zumindest 10 µm auf.

Üblicherweise ist die Randschicht auf maximal 10% des Granulatradius oder ungefähr 100 µm begrenzt. Der Kristallisationsgrad einer so teilkristallisierten Randschicht soll zumindest 10%, insbesondere zumindest 15%, betragen.

Diese Kristallisation entsteht im Gegensatz zu den im Wesentlichen im amorphen Zustand anfallenden Strängen und den daraus geformten amorphen Granulaten. Granulate werden dabei als amorph bezeichnet, solange ihre im DSC (Differential Scanning Calorimetry) gemessene Kristallinität unter 10%, insbesondere unter 7% und bevorzugt unter 5% liegt. Granulate, die nach der Granulation im heißen Zustand anfallen, müssen zur Messung der Kristallinität sofort abgeschreckt werden. Die DSC Messung erfolgt dazu mit einer Aufheizrate von 10 °C/min von 20 auf 300 °C und zur Berechnung der Kristallinität wird die Kristallisationswärme von der Schmelzwärme abgezählt und durch die Schmelzwärme für 100% kristallines Polymer geteilt. Für Polyethylentherephtalate wird dazu 118 J/g eingesetzt.

Um eine ausreichende Kristallisation an der Strangoberfläche zu gewährleisten, muss ein zu schnelles Abschrecken verhindert werden, was durch ein Anheben der Temperatur des Kühlfluides ermöglicht wird.

Insbesondere das Kühlfluid in der Abzugsstrecke kann dazu eine Temperatur T aufweisen, die im Bereich T1 bis T2 liegt, wobei T1 = Tg - 20 °C, insbesondere Tg - 10 °C, und T2 = Tg + 70 °C, insbesondere Tg + 30 °C beträgt und Tg der Glasübergangstemperatur des thermoplastischen Polyesters entspricht.

Gegenüber dem Stand der Technik wird bei den erfindungsgemäßen Verfahren Wert auf eine gesteigerte mechanische Belastung des extrudierten Stranges gelegt, wobei insbesondere z.B. eine möglichst große Strangaufweitung nach Austritt aus der Düse erzielt werden soll. Die Anmelderin hat dabei gefunden, dass z.B. die sehr hohe Austrittsgeschwindigkeit und der Verfahrensparameter des Verhältnisses der Strang-Austrittsgeschwindigkeit vₐᵤₛ durch Fläche f der Düsenöffnung, durch welche der jeweilige Strang austritt, für eine jeweilige Düsenöffnung oberhalb des oben genannten Wertes liegen soll. Dieser Parameter sowie die Grenzbedingung, welche dafür angegeben ist, stellt sicher, dass einerseits die extrudierten Stränge einer mechanischen Belastung ausgesetzt sind, dies jedoch andererseits nicht z.B. zu einem Strangabriss oder ähnlichem führt. Mit dem erfindungsgemäßen Verfahren, welches die oben beschriebenen Merkmale aufweist, ist es möglich, gleiche Polymerdichte vorausgesetzt, bei gleichem Massedurchsatz verglichen mit Verfahren, welche dem Stand der Technik entsprechen, und bei vergleichbaren Granulatabmessungen der erzeugten Granulatkörner dennoch auf besonders einfache Weise Granulatkörner mit gewünschten Eigenschaften, insbesondere hinsichtlich der Vermeidung der Verklebung der Granulatkörner, erfindungsgemäß herzustellen.

Bei einem erfindungsgemäßen Verfahren kann beim Austritt der Stränge aus den jeweiligen Düsen eine Verstreckung V = (v_{ab} - vₐᵤₛ)/vₐᵤₛ der austretenden Stränge so eingestellt werden, insbesondere durch Einstellung der Strangabzugsgeschwindigkeit v_{ab} und/oder der Austrittsgeschwindigkeit vₐᵤₛ der Stränge, dass die Bedingung V ≤ 0 erfüllt wird. Dieser Parameter der Verstreckung V mit dem entsprechenden Grenzwert ist ein Maß für die Strangaufweitung der so mit dem erfindungsgemäßen Verfahren entsprechend hergestellten Stränge, wobei rein rechnerisch bei bisherigen Verfahren des Standes der Technik - obwohl solche Betrachtungen dort nicht angestellt wurden - immer Werte von V viel größer als 0 gegeben waren. Gemäß dem Stand der Technik sollte also eine Strangaufweitung, wie sie durch die vorstehende Grenzbedingung charakterisiert wird, gerade vermieden werden.

Bei einem erfindungsgemäßen Verfahren kann die Austrittsgeschwindigkeit vₐᵤₛ der jeweiligen austretenden Stränge an der Düse eingestellt werden in einem Bereich von mindestens 110 m/min bis maximal 600 m/min, bevorzugt in einem Bereich von mindestens 110 m/min bis maximal 400 m/min. Damit sind auf einfache Weise zuverlässig hohe Durchsatzraten realisierbar.

Bevorzugt wird bei dem erfindungsgemäßen Verfahren die Strangabzugsgeschwindigkeit v_{ab} durch entsprechende Einstellung der Geschwindigkeit der Einzugswalzen in einen Bereich von mindestens 80 m/min bis maximal 350 m/min eingestellt.

Um die erfindungsgemäß erzeugten mechanischen Eigenschaften der extrudierten Stränge bzw. der daraus erzeugten Granulatkörner einfach und zuverlässig zu erzeugen, kann bei den erfindungsgemäßen Verfahren bevorzugt die Fläche f der jeweiligen Düsenöffnung der jeweiligen Düse auf weniger als 12 mm² eingestellt werden, bevorzugt auf weniger als 7 mm², bevorzugter auf weniger als 4 mm². Damit liegen diese Werte bei etwa der Hälfte bis einem Drittel der Werte, welche üblicher Weise im Stand der Technik Verwendung finden.

Erfindungsgemäß können, wie oben bereits diskutiert, durch Erhöhung der mechanischen Belastung, z.B. durch Erzeugung von Scherungsprofilen, gewünschte Materialeigenschaften und/oder Oberflächeneigenschaften des extrudierten Stranges und der daraus hergestellten Granulatkörner erzeugt werden und durch entsprechende Abkühlung "eingefroren" werden. Insbesondere bei Verwendung von runden Düsenöffnungen, aber allgemein auch bei Düsenöffnungen, welche beliebige Querschnittsformen aufweisen und die Möglichkeit bieten, einen sog. Ersatzdurchmesser zu berechnen (dies ist dem Fachmann allgemein geläufig und wird im Folgenden nicht näher beschrieben werden), kann dies erreicht werden, indem das Verhältnis des Durchmessers bzw. Eratzdurchmessers d zur Länge 1 der Düsenöffnung der jeweiligen Düse durch Variation des Durchmessers d und/oder der Länge 1 der Düsenöffnung erfindungsgemäß so eingestellt werden, dass das Verhältnis 1/d die Bedingung 1/d ≤ 1 erfüllt, bevorzugt die Bedingung 1/d ≤ 0,7 erfüllt, bevorzugter die Bedingung 1/d ≤0,5 erfüllt und noch bevorzugter die Bedingung 1/d = 0,3 erfüllt.

Generell kann eine Düsenvorrichtung eine Vielzahl an Düsen (Düsenbohrungen) aufweisen, in denen jeweils ein Strang gebildet wird. Die einzelnen Düsen sind mit einem Verteilerraum verbunden, von dem aus die Polymerschmelze auf die einzelnen Düsen verteilt wird. Die Düsen weisen üblicherweise an ihrer Eintrittsseite einen größeren Durchmesser auf als die Düsenöffnung am Austritt. Dementsprechend erfolgt eine Querschnittsverengung, die auch über mehrere Stufen erfolgen kann und üblicherweise in eine zylindrische Düsenöffnung mündet. Eine gesteigerte mechanische Belastung des extrudierten Materials lässt sich dabei erfindungsgemäß auch dadurch erreichen, dass unmittelbar vor dem Düsenaustritt eine starke Querschnittsverengung erfolgt. Zur Berechnung einer ausreichend hohen Querschnittsverengung, kann ein Verhältnis zwischen einer Querschnittsfläche F im Eintrittsbereich der Düse geteilt durch die Querschnittsfläche f der Düsenöffnung am Austritt gebildet werden. Da die Einlaufgeometrie bei einer Düse sehr unterschiedlich gestaltet sein kann und nicht in jedem Fall eine zylindrische Düsenbohrung vorliegt, wird die Eintrittsfläche F an einer definierten Stelle, die sich um eine Distanz L vor dem Austritt aus der Düsenöffnung befindet, gemessen. Erfindungsgemäß beträgt L weniger als 8 mm, bevorzugt weniger als 7 mm und bevorzugter weniger als 6 mm. Eine ausreichende mechanische Beanspruchung wird erreicht, wenn das Verhältnis F/f erfindungsgemäß einen Wert von ≥ 3 erfüllt, bevorzugt ≥ 5, bevorzugter ≥ 10 und noch bevorzugter ≥ 20 erfüllt. Bei ausreichend kleinen Düsenöffnungen kann F/f bis zu 1000 erreichen, wobei jedoch Werte unter 250 bevorzugt sind.

Hinsichtlich des Inkontaktbringens der erfindungsgemäß erzeugten Stränge mit dem Kühlfluid ist es bevorzugt, dass die aus den Düsen austretenden Stränge über einen Luftspalt in den Kühlfluidkontakt gebracht werden, wobei die Länge des Luftspalts sehr gering ist und auf höchstens 30 mm eingestellt wird, bevorzugt auf höchstens 10 mm, bevorzugter auf höchstens 5 mm und noch bevorzugter auf höchstens 2 mm. Es ist auch möglich, keinen Luftspalt vorzusehen, so dass die aus den jeweiligen Düsen austretenden Stränge unmittelbar in Kontakt mit dem Kühlfluid erfindungsgemäß kommen.

Erfindungsgemäß sind jegliche Arten von geeignetem Kühlfluid denkbar, besonders bevorzugt ist jedoch Wasser als Kühlfluid.

Das Kühlfluid kann sowohl in einem Bad oder in einer Schwallvorrichtung vorliegen oder es kann von Außen auf die Stränge aufgebracht werden. Das Kühlfluid muss unmittelbar vor dem Kontakt mit den extrudierten Strängen auf eine Temperatur eingestellt sein, die ein Einfrieren, der durch die mechanische Belastung erzeugten Oberflächenstruktur, gewährleistet. Obwohl Kühlfluide bis knapp unterhalb ihrer Siedetemperatur, Wasser bis ca. 95 °C, eingesetzt werden können, sind Temperaturen im Bereich der Glasübergangstemperatur des thermoplastischen Polyesters, typischerweise zwischen 50 und 90 °C, insbesondere zwischen 60 und 85 °C bevorzugt. Die Temperatur beim anfänglichen Kühlfluidkontakt kann der Fluidtemperatur in der nachfolgenden Abzugsstrecke entsprechen oder individuell geregelt sein.

Bei den erfindungsgemäßen Verfahren kann die Polyesterschmelze den Düsen mit einer Schmelzetemperatur T_{Schmelze} ≤ 280 °C, bevorzugt ≤270 °C zugeführt werden, bevorzugter mit einer Schmelzetemperatur T_{Schmelze} im Bereich 260 °C ≤ T_{Schmelze} ≤ 280 °C, noch bevorzugter im Bereich 260 °C ≤ T_{Schmelze} ≤ 270 °C. Dadurch können die erwünschten Eigenschaften der Granulatkörner besonders einfach und zuverlässig erzeugt werden.

Wie bereits weiter oben angesprochen, sind üblicherweise mehrere Düsen (Düsenbohrungen) in einer Düsenplatte zusammengefasst. Die Düsenplatte umfasst somit zumindest die Länge der Düsenbohrungen. Bevorzugter Weise lässt sich die Temperatur der Düsenplatte individuell regeln, wodurch sich die Temperatur der Düsen individuell regeln lässt. Um die Bildung der mechanischen Belastung zu unterstützen, soll die Düsenplattentemperatur und somit die Düsentemperatur bevorzugter Weise unterhalb der Schmelzetemperatur eingestellt sein. Bevorzugt sind Düsentemperaturen 10 bis 60 °C, insbesondere mehr als 15 °C unter der Schmelzetemperatur. Da thermoplastische Polyester oder Copolyester üblicherweise deutlich über ihrem Schmelzpunkt hergestellt und verarbeitet werden, liegt die Düsenplattentemperatur und somit die Düsentemperatur üblicherweise im Bereich oder unter der kristallinen Schmelztemperatur des Polyesters oder Copolyesters. Dabei können Temperaturen von 20 °C über bis 50 °C unter der Schmelztemperatur verwendet werden. Als Schmelztemperatur gilt dabei die im zweiten Durchgang mit einer Heizrate von 10 °C/min im DSC gemessene Peak Temperatur des kristallinen Schmelz-Peaks. Bei der Verarbeitung von Polyethylenterephthalat und seinen Copolymeren werden Düsenplattentemperaturen im Bereich von 200 bis 270 °C, insbesondere im Bereich von 210 bis 260 °C und bevorzugt unter 250 °C eingestellt. Obwohl auch elektrisch beheizte Düsenplatten eingesetzt werden können, sind zur individuellen Regelung der Düsenplattentemperatur Beheizungen mittels Wärmeträgermedien bevorzugt.

Besonders effektiv hinsichtlich der sich ergebenden Granulatkörner-Eigenschaften in Bezug auf ein Nichtverkleben ist es, wenn bei dem erfindungsgemäßen Verfahren bevorzugt unmittelbar auf ein Granulieren der Stränge im Granulator hin z.B. eine thermische Behandlung, eine Kristallisation, eine Temperung, eine Konditionierung, eine Entgasung und/oder eine Festphasenpolykondensation der so erzeugten Granulatkörner erfolgt, bevorzugt nach einem Trennen der Granulatkörner von dem Kühlfluid.

Es ist erfindungsgemäß von Vorteil, das Kühlfluid nur kurze Zeit mit den Strängen in Kontakt zu bringen und das Kühlfluid rasch von den Granulatkörner zu trennen. Die Kontaktzeit des Polyestermaterials mit dem Kühlfluid sollte dazu im Bereich 0,3 bis 10 Sekunden, bevorzugt im Bereich 1 bis 4 Sekunden, noch bevorzugter im Bereich 1 bis 3 Sekunden liegen. Wird Wasser als Kühlfluid für die Kühlung eines Polyethylenterephthalates oder eines seiner Copolyester verwendet, so weisen die Granulate nach dem Abtrennen des Kühlfluides eine Temperatur von 100 bis 170 °C, insbesondere von 110 bis 150 °C. auf. Um eine ausreichende Oberflächenkristallisation zu erreichen kann die Kontaktzeit mit dem Kühlfluid auch auf bis zu 20 Minuten, insbesondere 1 bis 10 Minuten verlängert werden. Die Granulattemperatur entspricht dann der Kühlfluidtemperatur.

Ein Kristallisationsschritt kann direkt anschließend an das Abtrennen vom Kühlfluid erfolgen. Bevorzugterweise wird den Granulaten während des Kristallisationsschritts weitere Wärme zugeführt, um möglichst unabhängig von den Eintrittsbedingungen in den Kristallisationsschritt konstante Austrittsbedingungen zu erhalten. Die Wärmezufuhr kann über beheizte Mantelflächen oder Einbauten des Kristallisators erfolgen, erfolgt aber bevorzugt durch Zufuhr eines heißen Prozessgases, insbesondere Stickstoff, CO₂ oder Luft, wobei die Prozessgastemperatur am Eintritt in den Kristallisator über der Temperatur der Granulate am Eintritt in den Granulator liegen soll und bevorzugt 10 bis 100 °C, insbesondere zumindest 20 °C über der Temperatur der Granulate am Eintritt in den Granulator liegt. Die Prozessgasmenge soll dabei üblicherweise ausreichen, um die Granulate im Kristallisationsschritt zu bewegen, insbesondere zu fluidisieren. Je nach Granulatgröße sind dazu Leerrohrgeschwindigkeiten von 0,5 bis 5 m/sec, insbesondere von 0,8 bis 2,5 m/sec notwendig. Bei der Verarbeitung von Polyethylenterephthalat oder eines seiner Copolyester ergibt sich dabei eine Granulattemperatur am Austritt aus dem Kristallisationsschritt von 140-200 °C, insbesondere von 150 bis 180 °C. Die mittlere Verweilzeit im Kristallisationsschritt kann zwischen 0,5 und 30 Minuten, insbesondere zwischen 1 und 10 Minuten betragen.

Nach dem Kristallisationsschritt kann ein Schritt zur Abtrennung von Grobanteilen, Agglomeraten und/oder von Feinanteilen erfolgen, wie dies zum Beispiel in WO01/12698, Borer et. al. beschrieben ist.

Bevorzugt kann bei den erfindungsgemäßen Verfahren nach dem Kristallisationsschritt ein Nachkondensationsschritt der so erzeugten kristallinen Granulatkörner durchgeführt werden. Alternativ können die Granulatkörner nach dem Trennen von dem Kühlfluid abgekühlt und zu einem späteren Zeitpunkt behandelt werden.

Für das erfindungsgemäße Verfahren ist ein Stranggranulator vorgesehen zur Herstellung von Granulatkörnern von Polymeren von thermoplastischen Polyester oder Copolyestern aus einer Polymerschmelze, welcher die erfindungsgemäßen Verfahren ausführen kann und dann auch eventuelle spezifische Ausrüstungen enthält, welche den entsprechenden Merkmalen der weiter oben beschriebenen Verfahren entsprechen bzw. zu deren Ausführung dienen. Dieser Stranggranulator kann auch mit anderen geeigneten Materialien beschickt werden und Granulatkörner aus anderen Materialien herstellen. Der Stranggranulator weist auf: Düsen, durch welche die Polyesterschmelze als Stränge austreten, eine unter Fluidbeaufschlagung die Stränge führende Abzugsrinne, eine Granulationsvorrichtung und Einzugswalzen, welche die Stränge von den Düsen abziehen und durch die Abzugsrinne der Granulationsvorrichtung zuleiten. Vorzugsweise ist zwischen den Düsen und der Abzugsrinne eine Schwalleinrichtung vorgesehen, welche die aus den jeweiligen Düsen austretenden Stränge mit einem Kühlfluidschwall beaufschlägt bevor die Stränge durch die Fluid beaufschlagte Abzugsrinne geführt sind. Die aus den jeweiligen Düsen austretenden, ungeführten Stränge werden somit mit einem Kühlfluidschwall beaufschlagt bevor die Stränge durch die Fluid beaufschlagte Abzugsrinne geführt sind. Die Beaufschlagung mit einem Fluidschwall durch die Schwalleinrichtung bedeutet in diesem Zusammenhang, dass die jeweiligen Stränge vollständig bzw. im Wesentlichen vollständig von Kühlfluid umgeben sind und durch den so vorliegenden Strom von Kühlfluid zu der Abzugsrinne zugeleitet bzw. zugeführt werden. Üblicherweise wird das Kühlfluid, das der Abzugsrinne und der Schwallvorrichtung zugeführt wird, im Wesentlichen im Kreislauf geführt, wobei sich in diesem Kreislauf weiter Aggregate, wie Wärmetauscher, Behälter, Filter, Pumpen und Verbindungsleitungen befinden können. Zusätzlich ist eine Zuleitung für frisches Kühlfluid vorgesehen. Die Abzugsrinne und die Schwallvorrichtung können mit nur einem oder mit individuell geregelten Wärmetauschern verbunden sein. Es besteht auch die Möglichkeit die Schwallvorrichtung direkt mit einer Zufuhrleitung mit frischem Kühlfluid zu verbinden.

Der Stranggranulator bietet auf einfache Weise eine im Wesentlichen sicherere Führung und eine zuverlässige Kühlung der aus den jeweiligen Düsen austretenden Stränge in dem Stranggranulator. Der im Stand der Technik vorliegende ungeführte Verlauf der extrudierten Stränge zwischen den Düsen und der Abzugsrinne, welcher dort beispielsweise je nach verwendetem Material leicht zu einem Strangabriss führen kann, wird somit vermieden, wobei zusätzlich ein schnelles und effektives Einwirken von Kühlfluid auf die aus den Düsen extrudierten Stränge erfolgt. Die sich nach Austritt aus der Düse ergebenden Materialeigenschaften des Stranges können somit "eingefroren" werden.

Bevorzugt ist zwischen den Düsen und der Schwallvorrichtung des Stranggranulators ein Luftspalt vorgesehen, durch welchen die Stränge frei laufen, insbesondere eine kurze Strecke frei laufen, wobei die Länge des Luftspalts höchstens 30 mm beträgt, bevorzugt höchstens 10 mm, bevorzugter höchstens 5 mm und noch bevorzugter höchstens 2 mm. Es ist auch möglich, dass der Stranggranulator keinen solchen Luftspalt aufweisen kann.

Die Verwendung eines Luftspalts kann je nach zu extrudierendem Material erfolgen, oder nicht.

Der Stranggranulator kann insbesondere aufgrund seiner "Einfrierwirkung" für das oben beschriebene erfindungsgemäße Verfahren Anwendung finden, wobei, soweit sinnvoll, die zum obigen erfindungsgemäßen Verfahren gemachten Angaben auch entsprechend in Bezug auf den Stranggranulator gelten.

Mit dem erfindungsgemäßen Verfahren lassen sich Granulatkörner von Polymeren von thermoplastischen Polyester oder Copolyestern herstellen.

Die erfindungsgemäß hergestellten Granulatkörnern bestehen aus thermoplastischen Polyestern oder Copolyestern. Die Herstellung der Granulate erfolgt mit einem Stranggranulator, wodurch Granulate mit einer im Wesentlichen zylindrischen Form entstehen. Eine typische Zylinderlänge beträgt dabei zwischen 0,3 und 10 mm, wobei Zylinderlängen von 1 bis 5 mm bevorzugt sind. Ein typischer Zylinderdurchmesser beträgt von 0,2 bis 8 mm, wobei Zylinderdurchmesser von 0,5 bis 5 mm bevorzugt sind.

Die Granulatkörner sollen im Wesentlichen solide sein. Expandierte Granulatkörner deren Dichte durch Gaseinschlüsse verringert ist oder, die eine offenzellige Schaumstruktur aufweisen, sind nicht bevorzugt. Bevorzugt sind Granulatkörner, deren gemessenes Gewicht weniger als 10% von ihrem aus Granulatvolumen und Polymerdichte berechneten Gewicht abweicht.

Die Granulatkörner sind im Wesentlichen amorph, wobei eine im DSC gemessenen Kristallinität ganzer Granulate von weniger als 10% besteht, insbesondere von weniger als 7%, bevorzugt von weniger als 5% besteht.

Die erfindungsgemäß hergestellten Granulatkörner weisen im Bereich ihrer Mantelfläche eine teilkristalline Struktur auf. Die teilkristalline Struktur im Bereich der Mantelfläche weist eine Schichtdicke von zumindest 5 µm, bevorzugt zumindest 10 µm, auf, wobei die Schichtdicke auf maximal 10% des Granulatradius oder ungefähr 100 µm begrenzt ist.

Bevorzugt weisen die Granulatkörner im Bereich ihrer Mantelfläche eine stark nukleierte Struktur auf, wobei zumindest eine 10 Mal höhere Nukleierungsdichte als im spannungsfreieren Materialbereich vorliegen soll.

Eine derart ausgebildete Randschicht weist im Vergleich zu herkömmlich hergestellten Granulaten eine deutlich geringere Klebeneigung in einem nachfolgenden Kristallisationsprozess auf und auch die Klebeneigung in einem nachfolgenden Festphasenpolykondensationsprozess ist reduziert, was um ca. 5 bis 15 °C höhere Behandlungstemperaturen ermöglicht.

Wie bereits gesagt, können erfindungsgemäß durch Erhöhung der mechanischen Belastung gewünschte Materialeigenschaften und/oder Oberflächeneigenschaften des extrudierten Stranges und der daraus hergestellt Granulatkörner erzeugt werden und durch entsprechende Abkühlung "eingefroren" werden. Dies kann erfindungsgemäß, wie beschrieben, auf mehrere Arten realisiert werden, wobei die vorgeschlagen Verfahren mit Ihren eventuell unterschiedlichen spezifischen Merkmalen einzeln oder auch in beliebiger, möglicher Kombination realisiert werden können, wobei sich gerade bei der Kombination mehrerer erfindungsgemäßer Möglichkeiten auch Synergieeffekte ergeben können, welche entsprechende erfindungsgemäße Verfahren noch effektiver und zuverlässiger machen können.

Die Erfindung wird im Folgenden anhand nicht beschränkender beispielhafter Ausführungsformen unter Bezugnahme auf die beigefügten Zeichnungen näher erläutert werden. Es zeigen:
Fig. 1 eine schematische Ansicht eines erfindungsgemäßen Stranggranulators; und
Fig. 2a bis c jeweils Ausschnitte erfindungsgemäßer Details des Details A in Fig. 1.

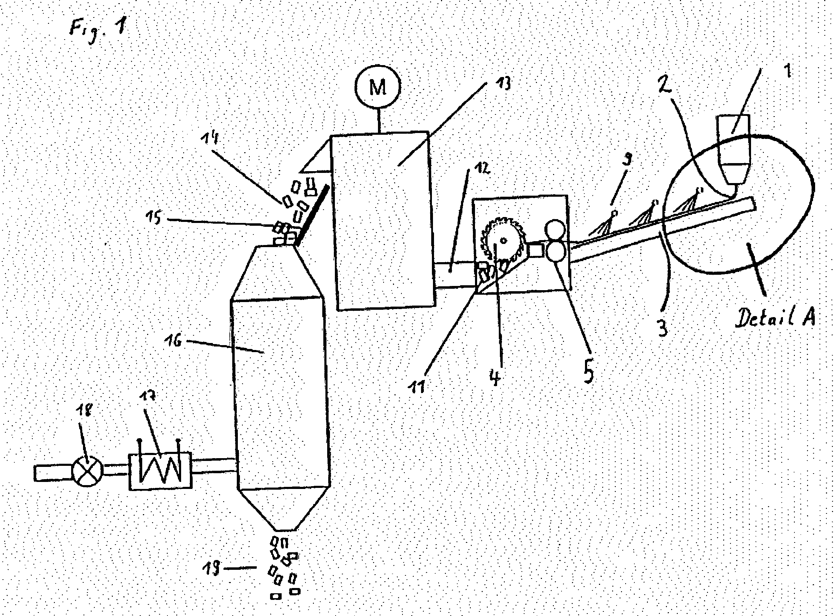

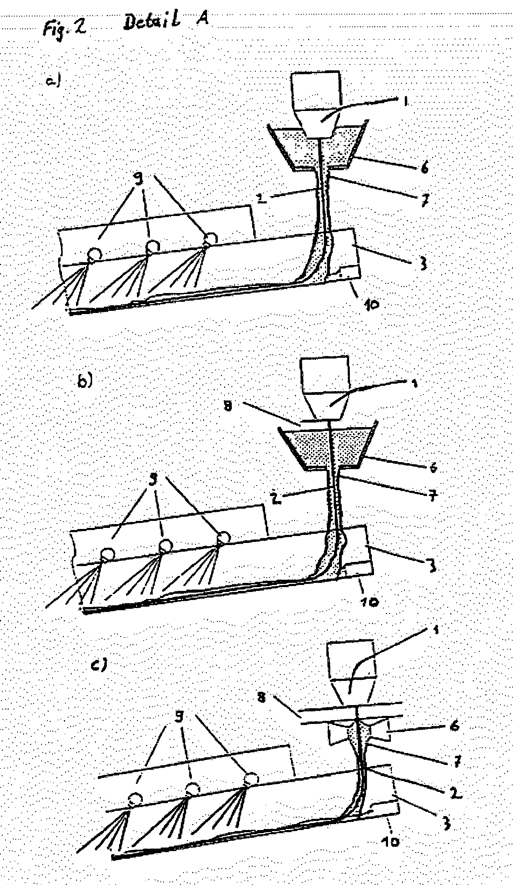

Fig. 1 zeigt schematisch eine Stranggranulator-Vorrichtung gemäß einer Ausführungsform der vorliegenden Erfindung, wobei mit dieser Stranggranulator-Vorrichtung der Gesamtprozess der Granulatkömer-Herstellung bei entsprechend erfindungsgemäßer Auslegung gegebenenfalls insbesondere auch gemäß den erfindungsgemäßen Verfahren erfolgen kann. Die in Fig. 1 gezeigte Stranggranulator-Vorrichtung zeigt schematisch einen Stranggranulator zur Herstellung von Granulatkörnern von Polymeren von thermoplastischen Polyester oder Copolyestern aus einer Polyesterschmelze. Es können gegebenenfalls auch andere Materialien damit verarbeitet werden. Der Stranggranulator weist auf Düsen 1 (nur eine gezeigt), durch welche die Polyesterschmelze als Stränge 2 (nur einer gezeigt) austreten, mit einem Abzugsbereich bzw. einer Abzugsstrecke, hier z.B. einer unter Fluidbeaufschlagung die Stränge 2 führenden Abzugsrinne 3, einer Granulationsvorrichtung 4 und Einzugswalzen 5, welche die Stränge 2 von den Düsen 1 abziehen und durch die Abzugsrinne 3 der Granulationsvorrichtung 4 zuleiten. Die extrudierten Stränge 2 treten dabei mit einer Austrittsgeschwindigkeit vₐᵤₛ aus den Düsen 1 aus und werden über die Einstellung der Geschwindigkeit der Einzugswalzen 5 mit einer Strangabzugsgeschwindigkeit v_{ab} der Granulationsvorrichtung 4 zugeführt. Die erfindungsgemäße Ausrüstung des Stranggranulators der Fig. 1 ergibt sich insbesondere im Detail A, welches in Fig. 1 durch einen Kreis kenntlich gemacht ist. Die spezifischen erfindungsgemäßen Ausführungsformen dieses Details A sind in den Fig. 2a bis c dargestellt und beschrieben.

Bezug nehmend weiter aus Fig. 1 werden die Granulatkörner 11 weiter im Fluidstrom nach Durchlaufen der Granulationsvorrichtung geführt und über eine Nachkühlstrecke 12 einem Granulattrockner 13 zugeführt, welcher einen Motor M aufweist, durch welchen die Granulatkörner in Bewegung gehalten werden. Der Granulattrockner 13 gibt amorphe Granulatkörner 14 aus, welche über eine Verbindung 15 vom Granulattrockner zu einem Kristallisator 16 zugeführt werden. Diesem Kristallisator 16 wird über einen Ventilator 18 und einem Gaserhitzer 17 beheiztes Gas zugeführt, so dass dort in dem Kristallisator 16 eine weitere (Durch-)Kristallisation der Granulatkörner erfolgen kann. Dem in Fig. 1 dargestellten Gesamtprozess ist bei 19 das kristallisierte Granulat zu entnehmen.

Fig. 2a bis c zeigt drei verschiedene Ausführungsformen des erfindungsgemäßen Stranggranulators der Fig. 1. Dabei ist in den Fig. 2a bis c jeweils eine erfindungsgemäß zwischen den Düsen 1 und der Abzugsrinne 3 angeordnete Schwalleinrichtung 6 gezeigt, welche die aus den jeweiligen Düsen 1 austretenden, ungeführten Stränge 2, bzw. die eigentlich ungeführten Stränge 2, mit einem Kühlfluidschwall 7 beaufschlagt, bevor die Stränge 2 durch die Fluid beaufschlagte Abzugsrinne 3 geführt sind. Im Bereich der Abzugsrinne 3 kann noch eine Strangkühlung 9 vorgesehen sein, welche durch weiteres Aufsprühen von Kühlfluid die in der Fluid beaufschlagten Abzugsrinne 3 geführten Stränge 2 weiter kühlt. Ferner zeigen die Fig. 2a bis c jeweils noch eine Fluidzuführung 10 für die Fluidbeaufschlagung der Stränge 2 in der Abzugsrinne 3.

Erfindungsgemäß ergibt sich bei den in den Fig. 2a bis c gezeigten Ausführungsformen eine Beaufschlagung der ungeführten Stränge 2 mit dem Kühlfluidschwall 7, wobei die Stränge 2 vollständig von Kühlfluid umgeben sind und zur Fluid beaufschlagten Abzugsrinne 3 unter Fluidbeaufschlagung laufen. Die Fluidbeaufschlagung für die Stränge 2 ist somit auch zwischen der Schwalleinrichtung 6 und der Fluid beaufschlagten Abzugsrinne 3 nicht unterbrochen. Dies bietet erfindungsgemäß den Vorteil zum einen einer ersten Kühlung durch den Kühlfluidschwall 7 als auch zum andern einer verbesserten Zuleitung der in dem Kühlfluidschwall 7 laufenden Stränge 2 zu der Abzugsrinne 3, d.h. die erfindungsgemäße Schwalleinrichtung 6 liefert einen Fluidschwall 7, in dem die Stränge 2 insbesondere ohne weitere (mechanische) Führungen zu der Abzugsrinne 3 laufen bzw. geführt werden.

Die erfindungsgemäße Schwalleinrichtung 6 kann so ausgestaltet sein, dass sie unmittelbar ohne weiteren Luftspalt 8 an die Düse 1 anschließt, wobei die Düse 1 sogar in die Schwalleinrichtung 6 eingetaucht sein kann (Fig. 2a) oder zwischen der Schwalleinrichtung 6 und der jeweiligen Düse 1 kann ein solcher Luftspalt 8 vorgesehen sein, durch welchen die Stränge 2 frei laufen, wobei die Länge des Luftspalts höchstens 30 mm beträgt, bevorzugt höchstens 10 mm, bevorzugter höchstens 5 mm und noch bevorzugter höchstens 2 mm (Fig. 2b und Fig. 2c).

Die erfindungsgemäße Schwalleinrichtung 6 kann als eine Art Rinne oder Wanne ausgebildet sein, wobei durch entsprechende Öffnungen oder eine entsprechende Öffnung die Stränge 2 jeweils durchtreten (Fig. 2a und Fig. 2b) oder die Schwalleinrichtung 6 kann durch Düsen gebildet sein, welche die jeweiligen Stränge 2 mit dem Kühlfluidschwall 7 umgeben (Fig. 2c). Dabei können je nach Geometrie eine oder mehrere solcher Schwalldüsen vorhanden sein. Die Düsen, welche gemäß der in Fig. 2c gezeigten Ausführungsform die Schwalleinrichtung 6 bilden, können in beliebiger Richtung auf die Stränge 2 ausgerichtet sein, sie sind bevorzugt schräg zur Laufrichtung der Stränge 2 nach unten geneigt. In Fig. 2c sind zwei solcher Schwalldüsen der Schwalleinrichtung 6 gemäß der dort gezeigten Ausführungsform zu sehen.

Die Düsen 1 des erfindungsgemäßen Stranggranulators können Teil einer Düsenplatte oder eines Gießkopfes sein.

### Beispiel 1

Ein Polyethylenterephthalat Copolymer mit 2% IPA, einer im DSC gemessenen Schmelztemperatur von 245 °C und einer intrinsischen Viskosität von 0.6dl/g wurde bei einer Schmelzetemperatur von 280 °C mit 60kg/h durch eine Düse gepresst. Die Düsenöffnung am Austritt hatte eine Durchmesser von 2 mm und eine Länge von 1 mm. 7 mm vor dem Austritt wies die Düse einen Durchmesser von 14 mm auf. Dementsprechend ergeben sich folgende Kennzahlen 1/d = 0.5; F/f = 49; vₐᵤₛ = 261 m/min; vₐᵤₛ/f= 83 m/(min*mm²).

Die Düsentemperatur betrug 230 °C. Der Strang wurde nach einer Distanz von 4 mm nach Düsenaustritt mit 84 °C warmen Wasser beaufschlagt und anschließend über eine ebenfalls mit 84 °C warmen Wasser beaufschlagten 3.2 m langen Abzugsrinne einer Granulationsvorrichtung zugeführt. Die Abzugsgeschwindigeit des Stranges betrug 200m/min woraus sich Granulate mit 3 mm Länge und 15mg Gewicht ergaben. Die Verweilzeit bis zur Granulatbildung betrug ca. 1 Sekunde. Über eine 1.2 m lange Zufuhrleitung gelangen die Granulate und das Wasser in einen Granulattrockner, in dem die Granulate vom Wasser getrennt werden. Die Verweilzeit in der Zufuhrleitung betrug ebenfalls 1 Sekunde und im Granulattrockener 0.2 Sekunden. Die getrockneten Granulate wurden direkt in eine Wirbelschichtkristallisator mit 0.05m² Siebbodenfläche übertragen. Die Eintrittstemperatur der Granulate in den Kristallisator betrug 96 °C. Dem Kristallisator wurden 3.7 Nm³/min Luft mit 180 °C zugeführt woraus sich eine Granulattemperatur von 163 °C ergab. Die mittlere Verweilzeit betrug 9 Minuten. Die Granulate waren homogen kristallisiert. Es sind keine Verklebungen entstanden.

### Beispiel 2

Granulate aus Beispiel 1 wurden direkt nach dem Austritt aus dem Granulattrockner abgeschreckt, im Vakuum bei 60 °C getrocknet und anschließend in einem Behälter ungerührt während 20 Minuten bei 170 °C kristallisiert.

Die Granulate waren frei fließend. 88% lagen als Einzelgranulate vor, 12% bildeten kleine Agglomerate, wobei die Agglomeratbildung jeweils über die Schnittflächen der Granulate erfolgt ist.

Im Dünnschnitt mit 2µm Dicke ist im Zentrum eines Granulates eine Kristallstruktur mit ca. 5µm Kristalldurchmesser vorhanden. Nach außen wird der durchschnittliche Kristalldurchmesser kleiner. Am Rand besteht eine ca. 40 µm Dicke Schicht in der die einzelnen Kristalle so klein sind, dass bei der gegebenen Probedicke keine Struktur mehr sichtbar ist, woraus sich ein Kristalldurchmesser < 1 µm ergibt. Dementsprechend ist die Nukleierungsdichte in einer Randschicht von ca. 40 µm um einen Faktor > 125 größer als im Zentrum.

### Vergleichsbeispiel 1

Der Versuch aus Beispiel 1 wurde wiederholt, jedoch mit einer Düsentemperatur von 280 °C. Im Kristallisator sind sofort Agglomerate entstanden. Das Wirbelbett ist zusammengebrochen. Ein Betrieb war nicht möglich.

### Vergleichsbeispiel 2

Analog zu Beispiel 2 wurde mit Granulaten aus Vergleichsbeispiel 1 eine Kristallisation durchgeführt. Die Granulate waren nicht mehr frei fließend. Es entstanden große Agglomerate, die auch über ihre Zylinderoberfläche miteinander verklebt waren.

### Beispiel 3

Ein Polyethylenterephthalat Copolymer wie in Beispiel 1 wurde bei einer Schmelzetemperatur von 276 °C mit 200 kg/h durch 2 Düsen gepresst. Die Düsenöffnungen am Austritt hatten eine Durchmesser von 5 mm und eine Länge von 1mm. 5 mm vor dem Austritt wiesen die Düsen einen Durchmesser von 18.3 mm auf. Dementsprechend ergeben sich folgende Kennzahlen 1/d = 0.2; F/f = 13.4; vₐᵤₛ = 70m/min; vₐᵤₛ/f= 3.5 m/(min*mm²).

Die Düsentemperatur betrug 260 °C. Der Strang wurde nach einer Distanz von 4 bis 5 mm nach Düsenaustritt mit 84 °C warmen Wasser beaufschlagt und anschließend über eine ebenfalls mit 84 °C warmen Wasser beaufschlagten 2.2 m langen Abzugsrinne einer Granulationsvorrichtung zugeführt. Die Abzugsgeschwindigeit des Stranges betrug 250 m/min woraus sich Granulate mit 3 mm Länge und 20mg Gewicht ergaben. Die Verweilzeit bis zur Granulatbildung betrug ca. 0.5 Sekunden. Über eine 1.2 m lange Zufuhrleitung gelangen die Granulate und das Wasser in einen Granulattrockner, in dem die Granulate vom Wasser getrennt werden. Die Verweilzeit in der Zufuhrleitung betrug 1 Sekunde und im Granulattrockener 0.2 Sekunden. Die getrockneten Granulate wurden direkt in einen Wirbelschichtkristallisator mit 0.05 m² Siebbodenfläche übertragen. Die Eintrittstemperatur der Granulate in den Kristallisator betrug 127 °C. Dem Kristallisator wurden 3.7 Nm³/min Luft mit 180 °C zugeführt woraus sich eine Granulattemperatur von 163 °C ergab. Die mittlere Verweilzeit betrug 2.8 Minuten. Trotz der kurzen Verweilzeit und der im Verhältnis zum Produkt geringen Gasmenge (Gasmassenstrom/Produktmassenstrom = 1.44) waren die Granulate homogen kristallisiert und es sind keine Verklebungen entstanden. Die aus den Düsen austretenden Stränge wurden leicht trüb. Granulate die nach dem Granulattrockner abgeschreckt wurden zeigen eine raue Oberfläche.

### Vergleichsbeispiel 3

Beispiel 3 wurde wiederholt, jedoch wurde Beaufschlagung der Polyesterstränge mit Wasser nach dem Düsenaustritt gestoppt. Unmittelbar nach Ende der Wasser Beaufschlagung sind im Kristallisator sofort Agglomerate entstanden. Das Wirbelbett ist zusammengebrochen. Ein Betrieb war nicht möglich. Die aus den Düsen austretenden Stränge blieben klar. Granulate die nach dem Granulattrockner abgeschreckt wurden zeigen eine glatte Oberfläche.

### Vergleichsbeispiel 4

Der Versuch aus Beispiel 3 wurde wiederholt, jedoch mit Düsen mit einer Düsenlänge von 5 mm. 5 mm vor dem Austritt wiesen die Düsen einen Durchmesser von 5 mm auf. Dementsprechend ergeben sich folgende Kennzahlen 1/d = 1; F/f = 1; vₐᵤₛ = 70m/min; vₐᵤₛ/f= 3.5 m/(min*mm²). Im Kristallisator sind Agglomerate entstanden. Das Wirbelbett ist zusammengebrochen. Ein Betrieb war nicht möglich.

## Patentansprüche

1. Verfahren zur Herstellung von Granulatkörnern von Polymeren von thermoplastischen Polyestern oder Copolyestern aus einer Polyesterschmelze mit einem Stranggranulator, bei dem die Polyesterschmelze Düsen (1) und danach als Stränge (2) über eine Abzugsstrecke (3) einer Granulationsvorrichtung (4) mit Einzugswalzen (5) zugeführt wird, **dadurch gekennzeichnet, dass** der Durchmesser d und/oder die Länge 1 der Düsenöffnung der jeweiligen Düsen (1) so eingestellt werden, dass das Verhältnis l/d die Bedingung l/d ≤ 1 erfüllt, und dass die aus den Düsen (1) austretenden Stränge (2) direkt oder über einen Luftspalt (8) in den Kühlfluidkontakt gebracht werden, wobei die Länge des Luftspalts (8) auf höchstens 30 mm eingestellt wird.

2. Verfahren gemäss Anspruch 1, **dadurch gekennzeichnet, dass** die Länge des Luftspalts (8) auf höchstens 10 mm eingestellt wird, bevorzugt auf höchstens 5 mm und bevorzugter auf höchstens 2 mm eingestellt wird.

3. Verfahren gemäss einem der Ansprüche 1 oder 2, **dadurch gekennzeichnet, dass** das Verhältnis l/d die Bedingung l/d ≤ 0,7 erfüllt, bevorzugter die Bedingung l/d ≤ 0,5 erfüllt und noch bevorzugter die Bedingung l/d = 0,3 erfüllt.

4. Verfahren zur Herstellung von Granulatkörnern von Polymeren von thermoplastischen Polyestern oder Copolyestern aus einer Polyesterschmelze mit einem Stranggranulator, bei dem die Polyesterschmelze Düsen (1) und danach als Stränge (2) über eine Abzugsstrecke (3) einer Granulationsvorrichtung (4) mit Einzugswalzen (5) zugeführt wird, wobei die Düsenöffnungen derart gestaltet sind, dass unmittelbar vor dem Düsenaustritt eine starke Querschnittsverengung erfolgt, **dadurch gekennzeichnet, dass** ein Verhältnis Fläche F am Eintritt in die Düsenbohrung, gemessen an einer Stelle, die sich um die Distanz L vor dem Austritt der Düsenöffnung befindet, wobei L<8mm beträgt, geteilt durch die Fläche f der Düsenöffnung einer jeweiligen Düse so eingestellt wird, dass die Bedingung F/f > 3 erfüllt wird, und dass die aus den Düsen austretenden Stränge direkt oder über einen Luftspalt (8) in den Kühlfluidkontakt gebracht werden, wobei die Länge des Luftspalts (8) auf höchstens 30 mm eingestellt wird.

5. Verfahren gemäss Anspruch 4, **dadurch gekennzeichnet, dass** die Länge s des Luftspalts (8) auf höchstens 10 mm, bevorzugt auf höchstens 5 mm und bevorzugter auf höchstens 2 mm eingestellt wird.

6. Verfahren gemäss einem der Ansprüche 4 oder 5, **dadurch gekennzeichnet, dass** das Verhältnis F/f die Bedingung F/f ≥ 5 erfüllt, bevorzugt die Bedingung F/f ≥ 10 und bevorzugter die Bedingung F/f ≥ 20 erfüllt.

7. Verfahren gemäss einem der Ansprüche 4 bis 7, **dadurch gekennzeichnet, dass** die Distanz L die Bedingung L<7mm erfüllt, bevorzugt die Bedingung L<6mm erfüllt.

## Claims

1. Process for the production of pellets of polymers of thermoplastic polyesters or copolyesters from a polyester melt by using a strand pelletizer, by introducing the polyester melt into dies (1) and then in the form of strands (2) through a take-off section (3) into a pelletizing device (4) with intake rolls (5), **characterized in that** the diameter d and/or the length 1 of the die aperture of the respective dies (1) is adjusted in such a way that the ratio l/d complies with the condition l/d ≤ 1, and that the strands (2) emerging from the dies (1) are brought directly or by way of an air gap (8) into contact with cooling fluid, where the length of the air gap (8) is adjusted to at most 30 mm.

2. Process according to Claim 1, **characterized in that** the length of the air gap (8) is adjusted to at most 10 mm, preferably to at most 5 mm and more preferably to at most 2 mm.

3. Process according to Claim 1 or 2, **characterized in that** the ratio l/d complies with the condition l/d ≤ 0.7, more preferably complies with the condition l/d ≤ 0.5 and still more preferably complies with the condition l/d = 0.3.

4. Process for the production of pellets of polymers of thermoplastic polyesters or copolyesters from a polyester melt by using a strand pelletizer, by introducing the polyester melt into dies (1) and then in the form of strands (2) through a take-off section (3) into a pelletizing device (4) with intake rolls (5), where the design of the die apertures is such that immediately prior to the die exit a severe narrowing of cross section takes place, **characterized in that** the ratio of area F at the entry into the bore of the die, measured at a point which is at a distance L prior to the exit of the die aperture, where L < 8 mm, to the area f of the die aperture of a respective die is adjusted so as to comply with the condition F/f > 3, and that the strands emerging from the dies are brought directly or by way of an air gap (8) into contact with cooling fluid, where the length of the air gap (8) is adjusted to at most 30 mm.

5. Process according to Claim 4, **characterized in that** the length s of the air gap (8) is adjusted to at most 10 mm, preferably to at most 5 mm and more preferably to at most 2 mm.

6. Process according to Claim 4 or 5, **characterized in that** the ratio F/f complies with the condition F/f ≥ 5, preferably complies with the condition F/f ≥ 10 and more preferably complies with the condition F/f ≥ 20.

7. Process according to any of Claims 4 to 7, **characterized in that** the distance L complies with the condition L < 7 mm, preferably complies with the condition L < 6 mm.

## Revendications

1. Procédé pour préparer des grains de granulat de polymères de polyesters ou de copolyesters thermoplastiques à partir d'une masse fondue de polyester à l'aide d'un granulateur à brins, dans lequel la masse fondue de polyester est alimentée dans des filières (1) puis, sous forme de brins (2) via une zone d'évacuation (3), dans un dispositif de granulation (4) présentant des cylindres d'entrée (5), **caractérisé en ce que** le diamètre d et/ou la longueur 1 de l'ouverture des différentes filières (1) sont réglé(e)s de manière telle que le rapport l/d satisfait à la condition l/d ≤ 1 et **en ce que** les brins (2) sortant des filières (1) sont amenés directement ou via une fente d'air (8) dans le contact avec un fluide de refroidissement, la longueur de la fente d'air (8) étant réglée à au maximum 30 mm.

2. Procédé selon la revendication 1, **caractérisé en ce que** la longueur de la fente d'air (8) est réglée à au maximum 10 mm, de préférence à au maximum 5 mm et plus préférablement à au maximum 2 mm.

3. Procédé selon l'une quelconque des revendications 1 ou 2, **caractérisé en ce que** le rapport l/d satisfait à la condition l/d ≤ 0,7, de préférence à la condition l/d ≤ 0,5 et encore plus préférablement à la condition l/d = 0,3.

4. Procédé pour préparer des grains de granulat de polymères de polyesters ou de copolyesters thermoplastiques à partir d'une masse fondue de polyester à l'aide d'un granulateur à brins, dans lequel la masse fondue de polyester est alimentée dans des buses (1) puis, sous forme de brins (2) via une zone d'évacuation (3), dans un dispositif de granulation (4) présentant des cylindres d'entrée (5), les ouvertures des filières étant conçues de manière telle qu'il existe un rétrécissement important de la section juste avant la sortie des filières, **caractérisé en ce qu'**un rapport d'une surface F à l'entrée dans l'ouverture des filières, mesurée en un endroit qui se trouve à une distance L en amont de la sortie de l'ouverture des filières, avec L < 8 mm, divisée par une surface f de l'ouverture d'une filière donnée est réglé de manière telle que la condition F/f > 3 est satisfaite, et **en ce que** les brins qui sortent des filières sont amenés directement ou via une fente d'air (8) dans le contact avec un fluide de refroidissement, la longueur de la fente d'air (8) étant réglée à au maximum 30 mm.

5. Procédé selon la revendication 4, **caractérisé en ce que** la longueur s de la fente d'air (8) est réglée à au maximum 10 mm, de préférence à au maximum 5 mm et plus préférablement à au maximum 2 mm.

6. Procédé selon l'une quelconque des revendications 4 ou 5, **caractérisé en ce que** le rapport F/f satisfait à la condition F/f ≥ 5, de préférence à la condition F/f ≥ 10 et plus préférablement à la condition F/f ≥ 20.

7. Procédé selon l'une quelconque des revendications 4 à 7, **caractérisé en ce que** la distance L satisfait à la condition L < 7 mm, de préférence à la condition L < 6 mm.
